# EUROPEAN PATENT APPLICATION

(11) **EP 3 392 814 A1**
(43) Date of publication of application: **24.10.2018**
(21) Application number: 18168033.1
(22) Date of filing: 18.04.2018
(51) Int. Cl.: G06Q 10/10, G06Q 10/08

(54) **MATERIALS OF CONCERN QUANTITATIVE ANALYSIS USING WEB BASED APPLICATION**

(30) Priority: 18.04.2017 IN 201711013773
(71) Applicant: Goodrich Corporation, Charlotte, NC 28217-4578 (US)
(72) Inventor: GRULKE, David J., Tolland, CT Connecticut 06084 (US); SWAMIDAS, Sandesh, Bengaluru (IN); GOWDA, Harish Shivarudra, 573201 Hassan (IN)
(74) Representative: Dehns

(57) **Abstract**

Embodiments herein include a computer-implemented method of a web application platform stored on a memory. The web application platform is executed by a processor coupled to the memory. The computer-implemented method of a web application platform includes receiving a parts list as an input and comparing attributes of the parts list with data standards. The computer-implemented method also includes producing material of concern data for the parts list based on the comparison of the attributes and evaluating the material of concern data against at least one preset material of concern list.

## Description

### CROSS-REFERENCE TO RELATED APPLICATIONS

This application claims the benefit of Indian Patent Application Number 201711013773, filed April 18, 2017, which is incorporated herein by reference in its entirety.

### BACKGROUND

Contemporary materials of concern (MOC) assessment processes are carried out to assess material and environmental compliance of products. Yet, contemporary MOC assessment processes are accomplished manually using spreadsheet based tools that are not standardized across companies and/or company business units. Further, since companies and company business units follow their own contemporary MOC assessment processes, inconsistencies are constantly found in MOC data and assessment results due to lack of standardization, incorrect material and finish process data, and less awareness on process information. Additionally, inconsistencies also result from the laborious and time consuming efforts required to manually manage the spreadsheet based tools.

### BRIEF DESCRIPTION

According to one or more embodiments, a computer-implemented method of a web application platform is provided herein. The web application platform is stored on a memory and executed by a processor coupled to the memory. The computer-implemented method of a web application platform includes receiving a parts list as an input and comparing attributes of the parts list with data standards. The computer-implemented method also includes producing material of concern data for the parts list based on the comparison of the attributes and evaluating the material of concern data against at least one preset material of concern list.

According to one or more embodiments or the computer-implemented method embodiment above, the parts list can comprise a bill of material and one or more parts for a particular product, and the attributes can correspond to the material and the one or more parts.

According to one or more embodiments or any of the computer-implemented method embodiments above, the attributes of the parts list can comprise characteristics and features extracted from engineering drawings for each part of the parts list.

According to one or more embodiments or any of the computer-implemented method embodiments above, the data standards can be predefined in libraries of the web application platform.

According to one or more embodiments or any of the computer-implemented method embodiments above, the material of concern data can comprise at least and material of concern substance name, a chemical abstract service number, and a weight percentage for each part of the parts list.

According to one or more embodiments or any of the computer-implemented method embodiments above, the computer-implemented method can comprise outputting a quantification result based on the evaluation of the material of concern data against the at least one preset material of concern list.

According to one or more embodiments, a computer program product comprising a computer readable storage medium having program instructions of a web application platform embodied therewith is provided herein. The program instructions are executable by a processor to cause the web application platform to receive a parts list as an input and compare attributes of the parts list with data standards. The program instructions are also executable by the processor to cause the web application platform to produce material of concern data for the parts list based on the comparison of the attributes and evaluate the material of concern data against at least one preset material of concern list.

According to one or more embodiments or the computer program product embodiment above, the parts list can comprise a bill of material and one or more parts for a particular product, and the attributes can correspond to the material and the one or more parts.

According to one or more embodiments or any of the computer program product embodiments above, the attributes of the parts list can comprise characteristics and features extracted from engineering drawings for each part of the parts list.

According to one or more embodiments or any of the computer program product embodiments above, the data standards can be predefined in libraries of the web application platform.

According to one or more embodiments or any of the computer program product embodiments above, the material of concern data can comprise at least and material of concern substance name, a chemical abstract service number, and a weight percentage for each part of the parts list.

According to one or more embodiments or any of the computer program product embodiments above, the program instructions can be further executable by the processor to cause the web application platform to output a quantification result based on the evaluation of the material of concern data against the at least one preset material of concern list.

According to an embodiment, a system is provided. The system comprises a processor and a computer memory having program instructions of a web application platform embodied therewith, the program instructions executable by a processor to cause the system to: receive a parts list as an input; compare attributes of the parts list with data standards; produce material of concern data for the parts list based on the comparison of the attributes; and evaluate the material of concern data against at least one preset material of concern list.

According to one or more embodiments or the system embodiment above, the parts list can comprise a bill of material and one or more parts for a particular product, and wherein the attributes correspond to the material and the one or more parts.

According to one or more embodiments or any of the system embodiments above, the attributes of the parts list can comprise characteristics and features extracted from engineering drawings for each part of the parts list.

According to one or more embodiments or any of the system embodiments above, the data standards can be predefined in libraries of the web application platform.

According to one or more embodiments or any of the system embodiments above, the material of concern data can comprise at least and material of concern substance name, a chemical abstract service number, and a weight percentage for each part of the parts list.

According to one or more embodiments or any of the system embodiments above, the program instructions can be further executable by the processor to cause the system to output a quantification result based on the evaluation of the material of concern data against the at least one preset material of concern list.

### BRIEF DESCRIPTION OF THE DRAWINGS

The following descriptions should not be considered limiting in any way. With reference to the accompanying drawings, like elements are numbered alike:
FIG. 1 depicts a process flow of a system in accordance with one or more embodiments;
FIG. 2 depicts a schematic flow of a system in accordance with one or more embodiments; and
FIG. 3 depicts a processing system in accordance with one or more embodiments.

### DETAILED DESCRIPTION

A detailed description of one or more embodiments of the disclosed apparatus and method are presented herein by way of exemplification and not limitation with reference to the Figures.

In view of the above, embodiments disclosed herein may include a system, method, and/or computer program product (herein a system) that provides a procedure with mistake proofing to identify/select appropriate processes, materials, grades, densities, and thickness for quantifying automated materials of concern (MOC) on a given part.

For instance, the automated MOC analysis and assessment (e.g., comparison and evaluation) of parts and/or products with level one mistake proofing via a web application platform. The automated MOC analysis and assessment, for instance, can include comparisons and evaluations of the parts and/or products to output quantification results indicating whether the products meet preset standards.

The technical effects and benefits of the system include providing consistency across the quantification reports and providing improved turnaround times for MOC comparison and evaluation of products. Thus, embodiments described herein are necessarily rooted in the system, and corresponding web application platform, to perform proactive operations to overcome problems specifically arising in the realm of MOC assessments (e.g., the problems of contemporary MOC assessment processes, such as the inconsistencies constantly being found in MOC data and assessment results and the laborious and time consuming efforts required to manually manage the spreadsheet based tools).

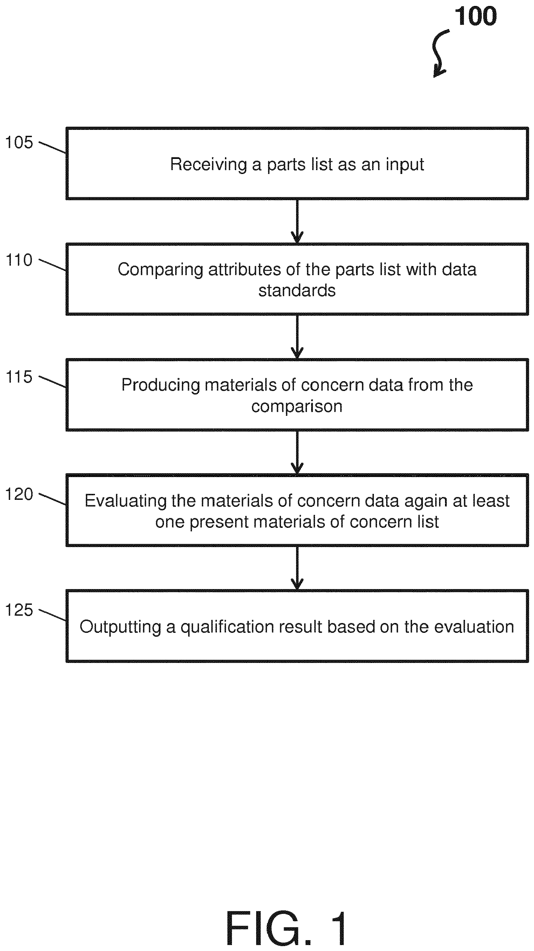

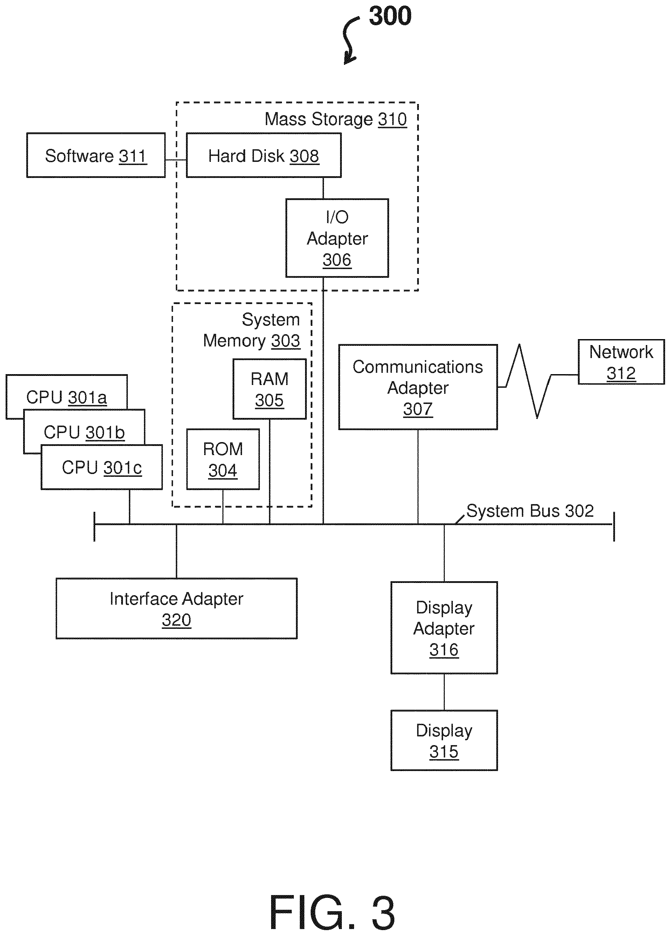

Turning now to FIG. 1, a process flow of a system is depicted in accordance with an embodiment. Note that the system can be an electronic, computer framework comprising and/or employing any number and combination of computing device and networks utilizing various communication technologies, as described herein (e.g., the system 300 of FIG. 3). The system can be scalable, extensible, and modular, with the ability to change to different services or reconfigure some features independently of others. In general, the system provides and supports a web application platform accessible by user devices through various networks. The web application platform is a software framework designed to support web services, web resources, and web application programmable interface that enable automated MOC analysis and assessment of products with level one mistake proofing. Note that level one is a complete elimination of a possibility of error, as any and all possibilities have been designed out of the system.

The process flow 100 begins at block 105, where the web application platform receives a parts list as an input. For example, the parts list can be a bill of material for a particular product and/or for multiple products within a device, machine, or architecture. A particular product can comprise a single given part, a one or more parts of a product, and/or multiple combined pats that make up a product, whether the part or product is an industry standard or proprietary. Further, a user via a user device can provide, as the input, a bill of material to the web application platform.

At block 110, the web application platform compares attributes of the parts list with data standards. The attributes of the parts list can comprise characteristics and features, such as surface areas, weights, materials, and part processes, extracted from engineering drawings of the parts themselves. The data standards can be predefined in libraries of the web application platform, e.g., the web application platform can comprise predefined in the data standards that include MOC substance names, CAS numbers, and surface densities of MOCs. For example, the web application platform can provide libraries in support of the automated MOC analysis and assessment of products. The libraries can provide part attributes data, material data, process data, special finish coating process data, and MOC data. In this way, the libraries are a database created specifically and uniquely for the web application platform of the system.

At block 115, the web application platform produces MOC data for the parts list from the comparison of block 110. The MOC data can comprise at least and MOC substance name, a chemical abstract service (CAS) number, and a weight percentage (w%) for each part of the parts list. The MOC substance name is the name of the chemical for each part of the parts list. The CAS number is a discrete identification number defined by and for the chemical industry that identifies each chemical and its structure. The weight percentage (w%) is an amount of a chemical comprised in each part of the parts list with respect to a total part weight. Note the weight percentage (w%) can also include a value for the entire product. For instance, the weight percentage (w%) can define an amount of a chemical on a screw within a product and an amount of chemical across the product itself (whether or not other parts of the product include the chemical).

Note that by performing the comparison, the web application platform can also directly quantify MOC content for each of the processes of a given part based on the attributes and the data standards. This quantification can be included in the data. For example, if a part utilizes a paint primer (e.g., which is an attribute of the part), the web application platform has predefined in the data standards how much of that paint primer should be used per a specified thickness of the coating. In turn, an automatic value is generated by the web application platform for the paint primer (e.g., and that automatic value is included in the MOC data). The technical effects and benefits of the operations itemized by blocks 110 and 115 include provide a consistent quantification for MOC content every time a given part is listed within the parts list.

At block 120, the web application platform evaluates the MOC data against at least one preset MOC list. The at least one preset MOC list can be one or more MOC list derived by a regulatory agency, a compliance organization, an original equipment manufacturer, product distributor, and/or a customer. In this regard, the web application platform can utilize an MOC list for each check or analysis that is required to render a complete and consistent quantification result.

At block 125, the web application platform outputs a quantification result based on the evaluation of block 120. The quantification result can be a consolidated report that includes the automated MOC analysis and assessment of the parts list and that is presented back to the user via the user device.

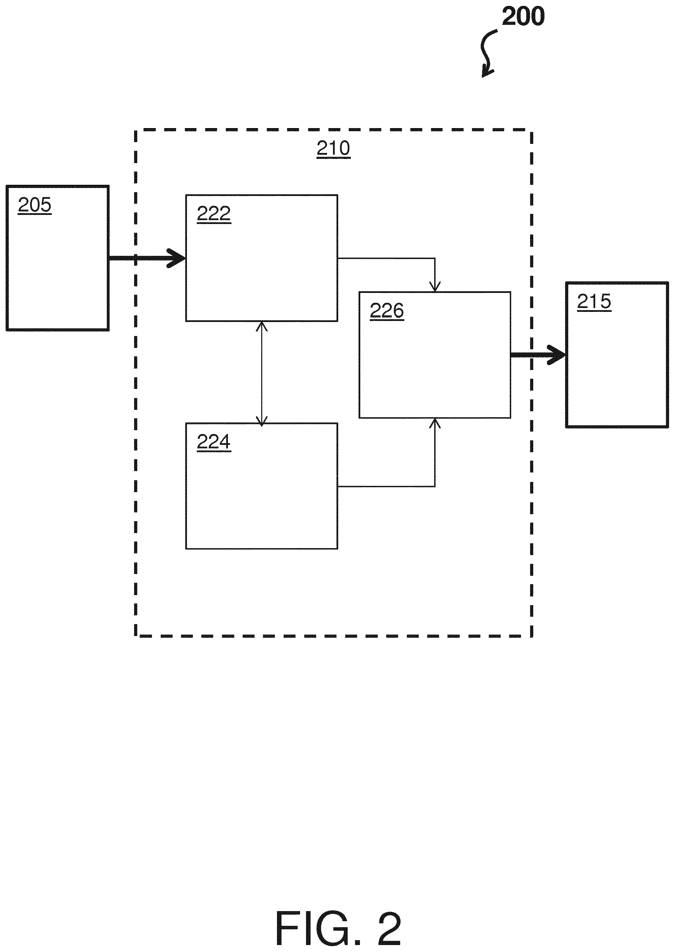

Turning now to FIG. 2, a schematic flow 200 of a system is depicted in accordance with one or more embodiments. In general, the schematic flow 200 depicts a procedure with mistake proofing comprising identify/select appropriate processes, materials, grades, densities, and thickness for quantifying MOC on a given part. In this regards, the schematic flow 200 comprises receiving an input 205, by a web application platform 210, to generate an output 215. As shown in FIG. 2, the web application platform 210 executes operations (represented by blocks 222, 224, and 226) on the input 205 to generate the output 215.

The input 205 can be a parts list for a particular product and/or for multiple parts and products within a device, machine, or architecture. The parts list can comprise part attribute data for each part, such as part details, material, finish process, surface area, and weight. The output 215 can be selected processes, materials, grades, densities, and thickness for quantifying MOC of the input 205 (e.g., MOC substance name, CAS Number, and percentage weight).

At block 222, the web application platform 210 compares the part attribute data of the input 205 with data standards to generate MOC data with respect to the part attribute data. The data standards are predefined libraries created specifically and uniquely for the web application platform of the system. The data standards can comprise material, finish process, finish specifications, material v/s MOC, and finish process v/s MOC.

At block 224, the web application platform 210 evaluates MOC's identified in the part list against MOC lists.

At block 226, the web application platform 210 generates the output from the evaluation of block 224. For instance, the web application platform can comprise inbuilt logic and tools to perform evaluations to quantify the MOC data and the weight percentage (w%) of the parts list. Further, the MOC analysis data of every part number is computed and stored in the database for reuse in future analyses.

In view of the above, the technical effects and benefits of the system can include standardizing MOC assessment process across various business units to yield consistent MOC results, which can then be provided to regulatory agencies (such as registration evaluation authorization of chemicals (REACH)) compliance - and customers. The technical effects and benefits of the system also include in improving the turnaround time for MOC assessment of legacy products which are required to be provided to customers within 45 days of request as per regulations

FIG. 3 depicts an example of a system 300 in accordance with one or more embodiments. The system 300 has one or more central processing units (CPU(s)) 301a, 301b, 301c, etc. (collectively or generically referred to as processor(s) 301). The processors 301, also referred to as processing circuits, are coupled via a system bus 302 to system memory 303 and various other components. The system memory 303 can include a read only memory (ROM) 304 and a random access memory (RAM) 305. The ROM 304 is coupled to the system bus 302 and may include a basic input/output system (BIOS), which controls certain basic functions of the system 300. The RAM is read-write memory coupled to the system bus 302 for use by the processors 301.

FIG. 3 further depicts an input/output (I/O) adapter 306 and a communications adapter 307 coupled to the system bus 302. The I/O adapter 306 may be a small computer system interface (SCSI) adapter that communicates with a hard disk 308 and/or any other similar component. The I/O adapter 306 and the hard disk 308 are collectively referred to herein as a mass storage 310. A software 311 for execution on the system 300 may be stored in the mass storage 310. The mass storage 310 is an example of a tangible storage medium readable by the processors 301, where the software 311 is stored as instructions for execution by the processors 301 to cause the system 300 to operate, such as is described herein with reference to FIGS. 1-2. Examples of computer program product and the execution of such instruction is discussed herein in more detail. Referring again to FIG. 3, a communications adapter 307 interconnects the system bus 302 with a network 312, which may be an outside network, enabling the system 300 to communicate with other such systems. A display (e.g., screen, a display monitor) 315 is connected to the system bus 302 by a display adapter 316, which may include a graphics controller to improve the performance of graphics intensive applications and a video controller. In one embodiment, the adapters 306, 307, and 316 may be connected to one or more I/O buses that are connected to the system bus 302 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to the system bus 302 via an interface adapter 320 and the display adapter 316. A keyboard, a mouse, a speaker, etc. can be interconnected to the system bus 302 via the interface adapter 320, which may include, for example, a Super I/O chip integrating multiple device adapters into a single integrated circuit.

Thus, as configured in FIG. 3, the system 300 includes processing capability in the form of the processors 301, and, storage capability including the system memory 303 and the mass storage 310, input means such as the keyboard and the mouse, and output capability including the speaker and the display 315. In one embodiment, a portion of the system memory 303 and the mass storage 310 collectively store an operating system to coordinate the functions of the various components shown in FIG. 3.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A computer-implemented method of a web application platform stored on a memory and executed by a processor coupled to the memory, the computer-implemented method comprising:
receiving, by the web application platform, a parts list as an input;
comparing, by the web application platform, attributes of the parts list with data standards;
producing, by the web application platform, material of concern data for the parts list based on the comparison of the attributes; and
evaluate, by the web application platform, the material of concern data against at least one preset material of concern list.

2. The computer-implemented method of claim 1, wherein the parts list comprises a bill of material and one or more parts for a particular product, and
wherein the attributes correspond to the material and the one or more parts.

3. The computer-implemented method of claim 1 or 2, wherein the attributes of the parts list comprise characteristics and features extracted from engineering drawings for each part of the parts list.

4. The computer-implemented method of any preceding claim, wherein the data standards are predefined in libraries of the web application platform.

5. The computer-implemented method of any preceding claim, wherein the material of concern data comprises at least material of concern substance name, a chemical abstract service number, and a weight percentage for each part of the parts list.

6. The computer-implemented method of any preceding claim, wherein outputting a quantification result based on the evaluation of the material of concern data against the at least one preset material of concern list.

7. A computer program product comprising a computer readable storage medium having program instructions of a web application platform embodied therewith, the program instructions executable by a processor to cause the web application platform to:
receive a parts list as an input;
compare attributes of the parts list with data standards;
produce material of concern data for the parts list based on the comparison of the attributes; and
evaluate the material of concern data against at least one preset material of concern list.

8. The computer program product of claim 7, wherein the parts list comprises a bill of material and one or more parts for a particular product, and
wherein the attributes correspond to the material and the one or more parts.

9. The computer program product of claim 7 or 8, wherein the attributes of the parts list comprise characteristics and features extracted from engineering drawings for each part of the parts list.

10. The computer program product of claim 7, 8 or 9, wherein the data standards are predefined in libraries of the web application platform.

11. The computer program product of any one of claims 7-10, wherein the material of concern data comprises at least and material of concern substance name, a chemical abstract service number, and a weight percentage for each part of the parts list.

12. The computer program product of any one of claims 7-11, wherein the program instructions are further executable by the processor to cause the web application platform to:
output a quantification result based on the evaluation of the material of concern data against the at least one preset material of concern list.
